# EUROPEAN PATENT SPECIFICATION

(11) **EP 0 305 011 B1**
(45) Date of publication and mention of the grant of the patent: **03.01.1996**
(21) Application number: 88201802.1
(22) Date of filing: 24.08.1988
(51) Int. Cl.: C08G 67/02

(54) **Preparation of olefin/CO copolymers**
Herstellung von Olefin/CO Copolymeren
Préparation de copolymère oléfine/CO

(30) Priority: 28.08.1987 NL 8702031
(43) Date of publication of application: 01.03.1989
(73) Proprietor: SHELL INTERNATIONALE RESEARCH MAATSCHAPPIJ B.V., NL-2596 HR Den Haag (NL)
(72) Inventor: Geuze, Maarten Marinus, NL-1031 CM Amsterdam (NL); Rosenbrand, Gerrit Gerardus, NL-1031 CM Amsterdam (NL); Salter, James Arthur, NL-1031 CM Amsterdam (NL)

(56) References cited:
- EP-A- 0 224 304
- EP-A- 0 248 483
- US-A- 3 694 412

## Description

### PREPARATION OF OLEFIN/CO COPOLYMERS

The invention relates to a process for the preparation of copolymers of carbon monoxide with one or more olefinically unsaturated compounds.

High molecular weight linear copolymers of carbon monoxide with one or more olefinically unsaturated compounds (referred to as A for short) in which the monomer units occur alternately and which therefore consist of units with the general formula -(CO)-A'-, in which A' represents a unit originating from a monomer A, can be prepared by contacting the monomers with a solution of a palladium-containing catalyst composition in a diluent in which the copolymers are almost or entirely insoluble. During the copolymerization, the copolymers are obtained in the form of a suspension in the diluent. The preparation of the copolymers can, in principle, be carried out in either of two manners, viz. batchwise or continuously.

Batchwise preparation of the copolymers is carried out by introducing catalyst into a reactor containing diluent and monomers and which is at the desired temperature and pressure. As polymerization proceeds, the pressure drops, the concentration of the copolymers in the diluent increases and the viscosity of the suspension rises. Polymerization is continued until the viscosity of the suspension has reached such a high value that continuing the process further would create difficulties in connection with heat removal. In principle, the only parameter which remains constant in batchwise copolymer preparation is the temperature.

In continuous copolymer preparation, a diluent, monomers and catalyst are added to a reactor containing monomers and a certain volume of the diluent, and a copolymer suspension is continuously withdrawn from it. During the continuous copolymer preparation, the temperature, the pressure and the liquid volume in the reactor are kept constant. After a starting-up period in which the copolymer concentration in the suspension increases to the desired value, a stationary state (= steady state) is reached which is characterized by the suspension withdrawn from the reactor having a constant copolymer content and the copolymers contained therein having a constant bulk density.

For the preparation of the copolymers on an industrial scale, a continuous, steady state process is to be preferred over batchwise production for the following reasons. In the first place, the continuous process gives a higher copolymer output because production does not have to be interrupted for charging and discharging the reactor. Since continuous operation, in contrast with batchwise production, is characterized by all the reaction parameters remaining constant, a continuous process is easier to control and is more suitable for automatic monitoring. Likewise, the continuous process produces copolymers which exhibit less variation in properties and have a more constant quality than those obtained from batchwise production.

One of the properties of the present copolymers is their bulk density. This plays an important role, both in the preparation and also in the refining, storage, transport and processing of the copolymers. As regards the preparation of the copolymers, it can be stated in approximate terms that the maximum permissible suspension concentration, expressed in kg polymer/kg suspension, is about one hundred times the bulk density expressed in g/ml. This means that when preparing a copolymer with a bulk density of 0.1 g/ml, the maximum suspension concentration will be about 10% and when preparing a copolymer with a bulk density of 0.5 g/ml the maximum suspension concentration will be about 50%. This means that increasing the bulk density by a factor of five enables about five times as much copolymer to be prepared in the same reactor volume. As regards the purification of the copolymers, such as filtering, washing and drying, the quantity of attached liquid is determined to a large extent by the bulk density of the copolymers. It has been found, for example, that a copolymer with a bulk density of 0.1 g/ml binds about 5 g diluent or washing liquid per gram, while the corresponding quantity for a copolymer with a bulk density of 0.5 g/ml is only 0.25 g.

The present invention relates to a process for the preparation of copolymers in which a mixture of carbon monoxide with one or more olefinically unsaturated compounds is copolymerized by continuously contacting the mixture in a single reactor in steady state with a solution of a palladium-containing catalyst composition in the presence of liquid diluent in which the copolymers are almost or entirely insoluble, the quotient of the quantity of copolymer formed per hour and the quantity of copolymer in the reactor at any moment being less than 0.2.

The present invention also relates to copolymers of carbon monoxide with one or more olefinically unsaturated compounds (A), characterized in that
a) they have a linear structure,
b) they are built up of units with the general formula -(CO)-A'- in which A' represents a monomer unit originating from a monomer A which was applied,
c) they are powders obtainable from a process consisting of contacting the monomers with a solution of a palladium-containing catalyst in a diluent in which the copolymers are almost or entirely insoluble and isolating the powder thus formed, and
d) they have a bulk density greater than 0.3 g/ml, preferably greater than 0.5 g/ml.

Non-prepublished patent application EP-A-248483, earlier filed than the present application for the same contracting states except GR and LU, discloses copolymers according to this invention which have a bulk density of 0.4 g/ml or less. The copolymers having a bulk density of 0.4 g/ml or less and/or their preparation are excluded from protection in all contracting states other than GR and LU.

Whilst EP-A-248483 teaches that it is desirable to prepare copolymers having a high bulk density, it does not provide any teaching as to how to prepare copolymers having a bulk density exceeding 0.4 g/ml.

In the process according to the invention, the quotient of the quantity of copolymer formed per hour and the quantity of copolymer in the reactor is kept at less than 0.2. The lower this quotient, the higher is the bulk density of the copolymers obtained. Preferably, the process is carried out such that the quotient is less than 0.15 and in particular less than 0.1. This quotient can be reduced by reducing the quantity of copolymer formed per hour and/or by raising the quantity of copolymer in the reactor. The quantity of copolymer formed per hour can be reduced, for example, by employing less catalyst and/or by employing a less active catalyst and/or by reducing the temperature and/or by reducing the pressure. The quantity of copolymer in the reactor can be raised by prolonging the residence time of the copolymer in the reactor. It will be clear that the minimum residence times of the copolymer in the reactor are set at 5, 7.5 and 10 hours respectively for the relevant quotients discussed herein.

In the process according to the invention, a palladium-containing catalyst composition is used. Very appropriate for the present purpose are catalyst compositions on the basis of
a) a palladium compound,
b) an anion of an acid with a pKa of less than 6, and
c) a compound with the general formula R₁R₂M₁-R-M₂R₃R₄ in which M₁ and M₂ are the same or different elements selected from the group formed by arsenic, antimony, phosphorus and nitrogen, in which R₁ to R₄ represent the same or different hydrocarbons, optionally substituted by polar groups, and in which R represents a divalent bridge group containing at least two carbon atoms in the bridge.

The palladium compound used as component a) in the catalyst compositions is preferably a palladium salt of a carboxylic acid and in particular palladium acetate. As component b), preferably an anion of an acid with a pKa of less than 4 (measured in aqueous solution at 18 °C) is used in catalyst compositions, and in particular an anion of an acid with a pKa of less than 2. More in particular, an anion of a sulphonic acid such as para-toluene sulphonic acid or an anion of a carboxylic acid such as trifluoroacetic acid is preferred. In the catalyst compositions, component b) is preferably present in a quantity of 0.5 to 200 and in particular 1.0 to 100 equivalents per gat palladium. Component b) can be incorporated in the catalyst compositions in the form of an acid and/or in the form of a salt. Possible salts are non-noble transition metal salts and in particular copper salts. If desired, components a) and b) can be used combined in a single compound. An example of such a compound is the complex Pd(CH₃CN)₂(O₃S-C₆H₄-CH₃)₂ that can be prepared by the reaction in acetonitrile either of palladium chloride with silver para-tosylate, or of palladium acetate with para-toluene sulphonic acid.

In the compounds used as component c), M₁ and M₂ are preferably the same as each other. Particular preference is given to components c) in which M₁ and M₂ both represent phosphorous. In the catalyst compositions, component c) is preferably present in a quantity of 0.1-2 and in particular of 0.75-1.5 mol per mol palladium. The groups R₁ to R₄ present in the compounds used as component c) are preferably aryl groups optionally substituted by polar groups, and in particular phenyl groups optionally substituted by polar groups. Preferably, at least one of the groups R₁ to R₄ contains at least one polar substituent. Some examples of polar substituents are dialkylamino groups such as dimethylamino groups and alkoxy groups such as methoxy and tert.butoxy groups. Preference is given to alkoxy groups and in particular to methoxy groups as polar substituents. Particular preference is given to components c) in which the groups R₁ to R₄ are the same as one another. If one or more of the groups R₁ to R₄ are aryl groups containing one or more polar substituents, then at least one of these polar substituents will preferably be in the ortho position relative to the phosphorus atoms to which the aryl group is linked. Examples of such polar substituted aryl groups are the 2-methoxyphenyl group and the 2,4-dimethoxyphenyl group. Preference is given to components c) in which the groups R₁ to R₄ are 2-methoxyphenyl groups.

In the compounds used in the catalyst compositions as components c) with the general formula R₁R₂M₁-R-M₂R₃R₄, R represents a divalent bridge group containing at least two carbon atoms in the bridge. Preferably, the group R contains three atoms in the bridge, of which at least two are carbon atoms. Examples of appropriate groups R are the -CH₂-CH₂-CH₂-group, the -CH₂-C(CH₃)₂-CH₂- group, the -CH₂-Si(CH₃)₂-CH₂- group and the -CH₂-C(R₅) (R₆)-CH₂-group, in which R₅ represents a methyl group and R₆ a diphenylphosphinomethyl group.

To increase the activity of the present catalyst compositions, preferably a 1,4-quinone is incorporated in them as component d). Besides optionally alkyl-substituted 1,4-benzoquinones, other 1,4-quinones such as optionally alkyl-substituted 1,4-naphthoquinones may also be used. Preference is given to the use of 1,4-benzoquinone and 1,4-naphthoquinone as activity promoter. The quantity of 1,4-quinone used is preferably 10-1000 moles and in particular 25-250 moles per gat palladium.

The copolymerization according to the invention is carried out in a diluent in which the polymers are almost or entirely insoluble. As diluents, either single diluents or compound diluents may be used. Examples of single diluents are lower aliphatic alcohols such as methanol and ethanol. Examples of compound diluents are mixtures of lower aliphatic alcohols and lower aliphatic ketones such as mixtures of methanol with acetone or with methyl ethyl ketone. In the present polymerization, preferably a lower aliphatic alcohol and in particular methanol is used as diluent. As a rule the same liquid is used as solvent for the palladium-containing catalyst composition as is used as diluent for the polymerization.

Suitable olefinically unsaturated organic compounds which can be copolymerized with carbon monoxide according to the invention are compounds consisting solely of carbon and hydrogen or compounds containing one or more hetero-atoms in addition to carbon and hydrogen. The process according to the invention is preferably applied for the preparation of copolymers of carbon monoxide with one or more olefinically unsaturated hydrocarbons. Examples of appropriate hydrocarbon monomers are ethylene and other alpha-olefins such as propylene, butene-1, hexene-1 and octene-1, as well as styrene and alkyl-substituted styrene such as p-methyl styrene and p-ethyl styrene. The process according to the invention is in particular very suitable for application in the preparation of copolymers of carbon monoxide with ethylene and for the preparation of terpolymers of carbon monoxide with ethylene and with another olefinically unsaturated hydrocarbon, in particular propene.

The quantity of catalyst composition used in the preparation of the copolymers can vary within wide limits. The quantity of catalyst used per mol of olefinically unsaturated compound to be polymerized preferably contains 10⁻⁷-10⁻³ and in particular 10⁻⁶-10⁻⁴ gat palladium.

The preparation of the copolymers is preferably carried out at a temperature of 20-200 °C and a pressure of 1-200 bar and in particular at a temperature of 30-150 °C and a pressure of 20-100 bar. The molar ratio of the olefinically unsaturated organic compounds relative to carbon monoxide in the mixture to be copolymerized is preferably 10:1-1:5 and in particular 5:1-1:2.

The invention will now be illustrated with reference to the following examples.

### Example 1

A carbon monoxide/ethylene copolymer was prepared as follows. The following components were added to a 150 l reactor: methanol, carbon monoxide, ethylene and a catalyst solution in methanol. The total gas feed velocity (carbon monoxide + ethylene) to the reactor was 700 N l/hour. The gas contained 43 vol.% ethylene and 57 vol.% carbon monoxide. The catalyst solution had the following composition: 1 l methanol contained 0.0075 mol palladium acetate (corresponding to 0.8 mg palladium/ml), 0.15 mol trifluoroacetic acid and 0.0091 mol 1,3-bis(diphenyl phosphino)propane. The pressure in the reactor was 45 bar. This pressure was maintained by removing the excess of feed gases from the reactor. The temperature was 45 °C. The quantity of methanol in the reactor was 70 kg. This quantity was kept constant by removing the excess suspension from the reactor. After the starting-up period the following process conditions had been reached: the catalyst concentration was 3.7 mg palladium/l methanol. The copolymer concentration was 105 g/kg methanol. The bulk density of the copolymer was 0.54 g/ml. In order to keep the copolymer concentration and the catalyst concentration constant, 3 kg methanol and 14 ml catalyst solution (corresponding to 11.2 mg palladium) had to be added to the reactor per hour. Both the polymer content of the suspension withdrawn from the reactor and the bulk density of the polymers present therein were constant, which indicated that the steady state had been reached.

The quantity of copolymer formed per hour was 315 g and the reaction velocity was 1200 g polymer/g palladium/hour.

### Example 2

A carbon monoxide/ethylene/propene terpolymer was prepared in a virtually analogous manner to the copolymer in Example 1, but with the following differences:
a) propene was additionally added to the reactor,
b) the total gas feed velocity (carbon monoxide + ethylene) was 295 N l/hour,
c) the catalyst concentration was 4.8 mg palladium/l methanol,
d) the polymer concentration was 106 g polymer/kg methanol,
e) the bulk density of the polymer was 0.53 g/ml, and
f) in order to keep the polymer concentration and catalyst concentration constant, 1.5 kg methanol, 9 ml catalyst solution (corresponding to 7.2 mg palladium) and 196 g propene had to be added to the reactor per hour.

The quantity of copolymer formed per hour was 159 g and the reaction velocity was 320 g polymer/g palladium/hour.

### Example 3

A carbon monoxide/ethylene copolymer was prepared in a virtually analogous manner to the copolymer in Example 1, but with the following differences:
a) the total gas feed velocity (carbon monoxide + ethylene) was 2000 N l/hour, b) the temperature was 65 °C,
c) the catalyst concentration was 20 mg palladium/l methanol,
d) the polymer concentration was 85 g polymer/kg methanol,
e) the bulk density of the polymer was 0.18 g/ml, and
f) in order to keep the polymer concentration and catalyst concentration constant, 18 kg methanol and 450 ml catalyst solution (corresponding to 360 mg palladium) had to be added to the reactor per hour.

The quantity of copolymer formed per hour was 1540 g and the reaction velocity was 1100 g polymer/g palladium/hour.

### Example 4

A carbon monoxide/ethylene/propene copolymer was prepared in a virtually analogous manner to the copolymer in Example 1, but with the following differences:
a) propene was additionally added to the reactor,
b) the total gas feed velocity (carbon monoxide + ethylene) was 610 N l/hour,
c) the catalyst solution had the following composition: a mixture of 750 ml methanol and 250 ml toluene contained 0.0045 mol palladium acetate (corresponding to 0.48 mg palladium/ml), 0.09 mol trifluoroacetic acid and 0.0054 mol 1,3-bis di(2-methoxyphenyl)phosphino propane,
d) the temperature was 77 °C,
e) the catalyst concentration was 2.8 mg palladium/kg methanol,
f) the polymer concentration was 280 g/kg methanol,
g) the bulk density of the polymer was 0.55 g/ml, and
h) in order to keep the polymer concentration and catalyst concentration constant, 2.1 kg methanol, 0.28 kg propene and 12 ml catalyst solution (corresponding to 11.2 mg palladium) had to be added to the reactor per hour.

The quantity of terpolymer formed per hour was 588 g and the reaction velocity was 3000 g polymer/g palladium/hour.

### Example 5

A carbon monoxide/ethylene/propene copolymer was prepared in a virtually analogous manner to the copolymer in Example 1, but with the following differences:
a) propene was additionally added to the reactor,
b) the total gas feed velocity (carbon monoxide + ethylene) was 2000 N l/hour,
c) the catalyst solution had the same composition as that used in Example 4,
d) the temperature was 85 °C,
e) the catalyst concentration was 2.5 mg palladium/kg methanol,
f) the polymer concentration was 85 g/kg methanol,
g) the bulk density of the polymer was 0.16 g/ml, and
h) in order to keep the copolymer concentration and catalyst concentration constant, 17 kg methanol, 2.27 kg propene and 177 ml catalyst solution (corresponding to 85 mg palladium) had to be added to the reactor per hour.

The quantity of copolymer formed per hour was 1680 g and the reaction velocity was 4800 g polymer/g palladium/hour.

Of Examples 1-5, Examples 1, 2 and 4 are in accordance with the invention. Example 1 relates to the preparation of a carbon monoxide/ethylene copolymer with a bulk density of 0.54 g/ml, which preparation was carried out as a continuous process such that the quotient of the quantity of copolymer formed per hour and the quantity of polymer in the reactor was 0.04. Examples 2 and 4 relate to preparations of carbon monoxide/ethylene/propene terpolymers with bulk densities of 0.53 and 0.55 g/ml, which preparations were carried out as a continuous process such that said quotient was 0.02 and 0.03 respectively. Examples 3 and 5 fall outside the scope of the invention. They are included in the patent application for purposes of comparison. These examples relate to the preparation of a carbon monoxide/ethylene copolymer with a bulk density of 0.18 g/ml and the preparation of a carbon monoxide/ethylene/propene terpolymer with a bulk density of 0.16 g/ml. Although these preparations were carried out in a continuous manner, said quotient was 0.26 and 0.28.

With the aid of ¹³C NMR analysis, it was established that the carbon monoxide/ethylene copolymers prepared according to Examples 1 and 3 had a linear alternating structure and therefore consisted of units with the formula -(CO)-C₂H₄-. It was also established by ¹³C NMR analysis that the carbon monoxide/ethylene/propene terpolymers prepared according to Examples 2, 4 and 5 had a linear structure and that they consisted of units with the formula -(CO)-C₂H₄- and units with the formula -(CO)-C₃H₆-, which units occurred in a random fashion in the terpolymers.

## Claims (Claims for the following Contracting State(s): AT, BE, CH, DE, FR, GB, IT, LI, NL, SE)

1. Process for the preparation of copolymers, characterized in that a mixture of carbon monoxide with one or more olefinically unsaturated compounds is copolymerized by continuously contacting the mixture in a single reactor in steady state with a solution of a palladium-containing catalyst composition in the presence of liquid diluent in which the copolymers are almost or entirely insoluble, the quotient of the quantity of copolymer formed per hour and the quantity of copolymer in the reactor at any moment being less than 0.2.

2. Process according to claim 1, characterized in that said quotient is less than 0.15.

3. Process according to claim 2, characterized in that said quotient is less than 0.1.

4. Process according to one or more of claims 1-3, characterized in that a catalyst composition is applied on the basis of
a) a palladium compound,
b) an anion of an acid with a pKa of less than 6, and
c) a compound with the general formula R₁R₂M₁-R-M₂R₃R₄ in which M₁ and M₂ are the same or different elements selected from the group formed by arsenic, antimony, phosphorus and nitrogen, in which R₁ to R₄ represent the same or different hydrocarbons, optionally substituted by polar groups, and in which R represents a divalent bridging group containing at least two carbon atoms in the bridge.

5. Process according to claim 4, characterized in that a catalyst composition is applied in which component c) is present in a quantity of 0.75-1.5 mol per mol palladium compound.

6. Process according to claim 4, characterized in that a catalyst composition is applied in which at least one of the groups R₁ to R₄ present in component c) are phenyl groups which contain at least one polar substituent, preferably an ortho-alkoxy group.

7. Process according to claim 6, characterized in that a catalyst composition is applied in which the groups R₁ to R₄ present in component c) are 2-methoxyphenyl groups.

8. Process according to one or more of claims 1-7, characterized in that ethylene or a mixture of ethylene with propene is applied as olefinically unsaturated compounds.

9. copolymers of carbon monoxide with one or more olefinically unsaturated compounds (A), characterized in that
a) they have a linear structure,
b) they are built up of units with the general formula -(CO)-A'-in which A' represents a monomer unit originating from a monomer A which was applied,
c) they are powders obtainable from a process consisting of contacting the monomers with a solution of a palladium-containing catalyst in a diluent in which the copolymers are almost or entirely insoluble and isolating the powder thus formed, and
d) they have a bulk density greater than 0.3 g/ml,
except for copolymers having a bulk density of 0.4 g/ml or less.

10. Copolymers as claimed in claim 9, in which the bulk density is greater than 0.5 g/ml.

## Claims (Claims for the following Contracting State(s): ES)

1. Process for the preparation of copolymers, characterized in that a mixture of carbon monoxide with one or more olefinically unsaturated compounds is copolymerized by continuously contacting the mixture in a single reactor in steady state with a solution of a palladium-containing catalyst composition in the presence of liquid diluent in which the copolymers are almost or entirely insoluble, the quotient of the quantity of copolymer formed per hour and the quantity of copolymer in the reactor at any moment being less than 0.2.

2. Process according to claim 1, characterized in that said quotient is less than 0.15.

3. Process according to claim 2, characterized in that said quotient is less than 0.1.

4. Process according to one or more of claims 1-3, characterized in that a catalyst composition is applied on the basis of
a) a palladium compound,
b) an anion of an acid with a pKa of less than 6, and
c) a compound with the general formula R₁R₂M₁-R-M₂R₃R₄ in which M₁ and M₂ are the same or different elements selected from the group formed by arsenic, antimony, phosphorus and nitrogen, in which R₁ to R₄ represent the same or different hydrocarbons, optionally substituted by polar groups, and in which R represents a divalent bridging group containing at least two carbon atoms in the bridge.

5. Process according to claim 4, characterized in that a catalyst composition is applied in which component c) is present in a quantity of 0.75-1.5 mol per mol palladium compound.

6. Process according to claim 4, characterized in that a catalyst composition is applied in which at least one of the groups R₁ to R₄ present in component c) are phenyl groups which contain at least one polar substituent, preferably an ortho-alkoxy group.

7. Process according to claim 6, characterized in that a catalyst composition is applied in which the groups R₁ to R₄ present in component c) are 2-methoxyphenyl groups.

8. Process according to one or more of claims 1-7, characterized in that ethylene or a mixture of ethylene with propene is applied as olefinically unsaturated compounds.

9. Process for the preparation of copolymers of carbon monoxide with one or more olefinically unsaturated compounds (A) consisting of contacting the monomers with a solution of a palladium-containing catalyst in a diluent in which the copolymers are almost or entirely insoluble and isolating the powder thus formed, which copolymers
a) have a linear structure,
b) are built up of units with the general formula -(CO)-A'- in which A' represents a monomer unit originating from a monomer A which was applied,
c) are powders, and
d) have a bulk density greater than 0.3 g/ml,
except for a process for the preparation of copolymers having a bulk density of 0.4 g/ml or less.

10. Process as claimed in claim 9, wherein polymers are prepared having a bulk density greater than 0.5 g/ml.

## Claims (Claims for the following Contracting State(s): GR and LU)

1. Process for the preparation of copolymers, characterized in that a mixture of carbon monoxide with one or more olefinically unsaturated compounds is copolymerized by continuously contacting the mixture in a single reactor in steady state with a solution of a palladium-containing catalyst composition in the presence of liquid diluent in which the copolymers are almost or entirely insoluble, the quotient of the quantity of copolymer formed per hour and the quantity of copolymer in the reactor at any moment being less than 0.2.

2. Process according to claim 1, characterized in that said quotient is less than 0.15.

3. Process according to claim 2, characterized in that said quotient is less than 0.1.

4. Process according to one or more of claims 1-3, characterized in that a catalyst composition is applied on the basis of
a) a palladium compound,
b) an anion of an acid with a pKa of less than 6, and
c) a compound with the general formula R₁R₂M₁-R-M₂R₃R₄ in which M₁ and M₂ are the same or different elements selected from the group formed by arsenic, antimony, phosphorus and nitrogen, in which R₁ to R₄ represent the same or different hydrocarbons, optionally substituted by polar groups, and in which R represents a divalent bridging group containing at least two carbon atoms in the bridge.

5. Process according to claim 4, characterized in that a catalyst composition is applied in which component c) is present in a quantity of 0.75-1.5 mol per mol palladium compound.

6. Process according to claim 4, characterized in that a catalyst composition is applied in which at least one of the groups R₁ to R₄ present in component c) are phenyl groups which contain at least one polar substituent, preferably an ortho-alkoxy group.

7. Process according to claim 6, characterized in that a catalyst composition is applied in which the groups R₁ to R₄ present in component c) are 2-methoxyphenyl groups.

8. Process according to one or more of claims 1-7, characterized in that ethylene or a mixture of ethylene with propene is applied as olefinically unsaturated compounds.

9. Copolymers of carbon monoxide with one or more olefinically unsaturated compounds (A), characterized in that
a) they have a linear structure,
b) they are built up of units with the general formula -(CO)-A'-in which A' represents a monomer unit originating from a monomer A which was applied,
c) they are powders obtainable from a process consisting of contacting the monomers with a solution of a palladium-containing catalyst in a diluent in which the copolymers are almost or entirely insoluble and isolating the powder thus formed, and
d) they have a bulk density greater than 0.3 g/ml.

10. Copolymers as claimed in claim 9, in which the bulk density is at least 0.5 g/ml.

## Patentansprüche (Patentansprüche für folgende(n) Vertragsstaat(en): AT, BE, CH, DE, FR, GB, IT, LI, NL, SE)

1. Verfahren zur Herstellung von Copolymeren, dadurch gekennzeichnet, daß eine Mischung aus Kohlenmonoxid und einer oder mehreren olefinisch ungesättigten Verbindungen durch kontinuierliche Kontaktierung der Mischung in einem Einzelreaktor im stationären Zustand mit der Lösung einer palladiumhaltigen Katalysatorzusammensetzung in Gegenwart eines flüssigen Verdünnungsmittels, in dem die Copolymere nahezu oder vollständig unlöslich sind, copolymerisiert wird, wobei der Quotient aus der pro Stunde gebildeten Copolymermenge und der zu einem beliebigen Zeitpunkt im Reaktor vorliegenden Copolymermenge weniger als 0,2 beträgt.

2. Verfahren nach Anspruch 1, dadurch gekennzeichnet, daß dieser Quotient weniger als 0,15 beträgt.

3. Verfahren nach Anspruch 2, dadurch gekennzeichnet, daß dieser Quotient weniger als 0,1 beträgt.

4. Verfahren nach einem oder mehreren der Ansprüche 1-3, dadurch gekennzeichnet, daß eine Katalysatorzusammensetzung auf der Basis:
a) einer Palladiumverbindung,
b) eines Anions einer Säure mit einem pKₛ-Wert von weniger als 6 und
c) einer Verbindung der allgemeinen Formel R₁R₂M₁-R-M₂R₃R₄, worin M₁ und M₂ gleiche oder verschiedene Elemente, ausgewählt aus der durch Arsen, Antimon, Phosphor und Stickstoff gebildeten Gruppe, worin R₁ bis R₄ gegebenenfalls durch polare Gruppen substituierte gleiche oder verschiedene Kohlenwasserstoffe, und worin R eine zweiwertige Brückengruppe mit mindestens zwei Kohlenstoffatomen in der Brücke bedeuten, zur Anwendung kommt.

5. Verfahren nach Anspruch 4, dadurch gekennzeichnet, daß eine Katalysatorzusammensetzung zur Anwendung kommt, in der die Komponente c) in einer Menge von 0,75-1,5 Mol pro Mol Palladiumverbindung vorliegt.

6. Verfahren nach Anspruch 4, dadurch gekennzeichnet, daß eine Katalysatorzusammensetzung zur Anwendung kommt, worin mindestens eine der in der Komponente c) vorliegenden Gruppen R₁ bis R₄ Phenylgruppen mit mindestens einem polaren Substituenten, vorzugsweise einer ortho-Alkoxygruppe, bedeuten.

7. Verfahren nach Anspruch 6, dadurch gekennzeichnet, daß eine Katalysatorzusammensetzung zur Anwendung kommt, worin die in der Komponente c) vorliegenden Gruppen R₁ bis R₄ 2-Methoxyphenylgruppen bedeuten.

8. Verfahren nach einem oder mehreren der Ansprüche 1-7, dadurch gekennzeichnet, daß als olefinisch ungesättigte Verbindungen Ethylen oder eine Mischung aus Ethylen und Propen verwendet wird.

9. Copolymere aus Kohlenmonoxid und einer oder mehreren olefinisch ungesättigten Verbindungen (A), dadurch gekennzeichnet, daß sie
a) eine lineare Struktur besitzen,
b) aus Einheiten der allgemeinen Formel -(CO)-A'-aufgebaut sind, worin A' eine von einem zur Anwendung gekommenen Monomer A stammende Monomereinheit bedeutet,
c) Pulver darstellen, die durch ein Verfahren erhältlich sind, das darin besteht, daß die Monomere mit einer Lösung eines palladiumhaltigen Katalysators in einem Verdünnungsmittel, in dem die Copolymere nahezu oder vollständig unlöslich sind, kontaktiert werden und das so gebildete Pulver isoliert wird, und
d) eine Schüttdichte von mehr als 0,3 g/ml besitzen,
mit Ausnahme der Copolymere mit eine Schüttdichte von 0,4 g/ml oder weniger.

10. Copolymere nach Anspruch 9, deren Schüttdichte mehr als 0,5 g/ml beträgt.

## Patentansprüche (Patentansprüche für folgende(n) Vertragsstaat(en): ES)

1. Verfahren zur Herstellung von Copolymeren, dadurch gekennzeichnet, daß eine Mischung aus Kohlenmonoxid und einer oder mehreren olefinisch ungesättigten Verbindungen durch kontinuierliche Kontaktierung der Mischung in einem Einzelreaktor im stationären Zustand mit der Lösung einer palladiumhaltigen Katalysatorzusammensetzung in Gegenwart eines flüssigen Verdünnungsmittels, in dem die Copolymere nahezu oder vollständig unlöslich sind, copolymerisiert wird, wobei der Quotient aus der pro Stunde gebildeten Copolymermenge und der zu einem beliebigen Zeitpunkt im Reaktor vorliegenden Copolymermenge weniger als 0,2 beträgt.

2. Verfahren nach Anspruch 1, dadurch gekennzeichnet, daß dieser Quotient weniger als 0,15 beträgt.

3. Verfahren nach Anspruch 2, dadurch gekennzeichnet, daß dieser Quotient weniger als 0,1 beträgt.

4. Verfahren nach einem oder mehreren der Ansprüche 1-3, dadurch gekennzeichnet, daß eine Katalysatorzusammensetzung auf der Basis:
a) einer Palladiumverbindung,
b) des Anions einer Säure mit einem pKₛ-Wert von weniger als 6 und
c) einer Verbindung der allgemeinen Formel R₁R₂M₁-R-M₂R₃R₄, worin M₁ und M₂ gleiche oder verschiedene Elemente, ausgewählt aus der durch Arsen, Antimon, Phosphor und Stickstoff gebildeten Gruppe, worin R₁ bis R₄ gegebenenfalls durch polare Gruppen substituierte gleiche oder verschiedene Kohlenwasserstoffe, und worin R eine zweiwertige Brückengruppe mit mindestens zwei Kohlenstoffatomene in der Brücke bedeuten, zur Anwendung kommt.

5. Verfahren nach Anspruch 4, dadurch gekennzeichnet, daß eine Katalysatorzusammensetzung zur Anwendung kommt, in der die Komponente c) in einer Menge von 0,75-1,5 Mol pro Mol Palladiumverbindung vorliegt.

6. Verfahren nach Anspruch 4, dadurch gekennzeichnet, daß eine Katalysatorzusammensetzung zur Anwendung kommt, worin mindestens eine der in der Komponente c) vorliegenden Gruppen R₁ bis R₄ Phenylgruppen mit mindestens einem polaren Substituenten, vorzugsweise einer ortho-Alkoxygruppe, bedeuten.

7. Verfahren nach Anspruch 6, dadurch gekennzeichnet, daß eine Katalysatorzusammensetzung zur Anwendung kommt, worin die in der Komponente c) vorliegenden Gruppen R₁ bis R₄ 2-Methoxyphenylgruppen bedeuten.

8. Verfahren nach einem oder mehreren der Ansprüche 1-7, dadurch gekennzeichnet, daß als olefinisch ungesättigte Verbindungen Ethylen oder eine Mischung aus Ethylen und Propen verwendet wird.

9. Verfahren zur Herstellung von Copolymeren aus Kohlenmonoxid und einer oder mehreren olefinisch ungesättigten Verbindungen (A), das darin besteht, daß die Monomere mit einer Lösung eines palladiumhaltigen Katalysators in einen Verdünnungsmittel, in dem die Copolymere nahezu oder vollständig unlöslich sind, kontaktiert werden und das so gebildete Pulver isoliert wird, wobei die Copolymere
a) eine lineare Struktur besitzen,
b) aus Einheiten der allgemeinen Formel -(CO)-A'-aufgebaut sind, worin A' eine von einem zur Anwendung gekommenen Monomer A stammende Monomereinheit bedeutet,
c) Pulver darstellen und
d) eine Schüttdichte von mehr als 0,3 g/ml besitzen, mit Ausnahme der Copolymere mit einer Schüttdichte von 0,4 g/ml oder weniger.

10. Copolymere nach Anspruch 9, deren Schüttdichte mehr als 0,5 g/ml beträgt.

## Patentansprüche (Patentansprüche für folgende(n) Vertragsstaat(en): GR, LU)

1. Verfahren zur Herstellung von Copolymeren, dadurch gekennzeichnet, daß eine Mischung aus Kohlenmonoxid und einer oder mehreren olefinisch ungesättigten Verbindungen durch kontinuierliche Kontaktierung der Mischung in einem Einzelreaktor im stationären Zustand mit der Lösung einer palladiumhaltigen Katalysatorzusammensetzung in Gegenwart eines flüssigen Verdünnungsmittels, in dem die Copolymere nahezu oder vollständig unlöslich sind, copolymerisiert wird, wobei der Quotient aus der pro Stunde gebildeten Copolymermenge und der zu einem beliebigen Zeitpunkt im Reaktor vorliegenden Copolymermenge weniger als 0,2 beträgt.

2. Verfahren nach Anspruch 1, dadurch gekennzeichnet, daß dieser Quotient weniger als 0,15 beträgt.

3. Verfahren nach Anspruch 2, dadurch gekennzeichnet, daß dieser Quotient weniger als 0,1 beträgt.

4. Verfahren nach einem oder mehreren der Ansprüche 1-3, dadurch gekennzeichnet, daß eine Katalysatorzusammensetzung auf der Basis:
a) einer Palladiumverbindung,
b) des Anions einer Säure mit einem pK_{S}-Wert von weniger als 6 und
c) einer Verbindung der allgemeinen Formel R₁R₂M₁-R-M₂R₃R₄, worin M₁ und M₂ gleiche oder verschiedene Elemente, ausgewählt aus der durch Arsen, Antimon, Phosphor und Stickstoff gebildeten Gruppe, worin R₁ bis R₄ gegebenenfalls durch polare Gruppen substituierte gleiche oder verschiedene Kohlenwasserstoffe, und worin R eine zweiwertige Brückengruppe mit mindestens zwei Kohlenstoffatomene in der Brücke bedeuten, zur Anwendung kommt.

5. Verfahren nach Anspruch 4, dadurch gekennzeichnet, daß eine Katalysatorzusammensetzung zur Anwendung kommt, in der die Komponente c) in einer Menge von 0,75-1,5 Mol pro Mol Palladiumverbindung vorliegt.

6. Verfahren nach Anspruch 4, dadurch gekennzeichnet, daß eine Katalysatorzusammensetzung zur Anwendung kommt, worin mindestens eine der in der Komponente c) vorliegenden Gruppen R₁ bis R₄ Phenylgruppen mit mindestens einem polaren Substituenten, vorzugsweise einer ortho-Alkoxygruppe, bedeuten.

7. Verfahren nach Anspruch 6, dadurch gekennzeichnet, daß eine Katalysatorzusammensetzung zur Anwendung kommt, worin die in der Komponente c) vorliegenden Gruppen R₁ bis R₄ 2-Methoxyphenylgruppen bedeuten.

8. Verfahren nach einem oder mehreren der Ansprüche 1-7, dadurch gekennzeichnet, daß als olefinisch ungesättigte Verbindungen Ethylen oder eine Mischung aus Ethylen und Propen verwendet wird.

9. Copolymere aus Kohlenmonoxid und einer oder mehreren olefinisch ungesättigten Verbindungen (A) , dadurch gekennzeichnet, daß sie
a) eine lineare Struktur besitzen,
b) aus Einheiten der allgemeinen Formel -(CO)-A'-aufgebaut sind, worin A' eine von einem zur Anwendung gekommenen Monomer A stammende Monomereinheit bedeutet,
c) Pulver darstellen, die durch ein Verfahren erhältlich sind, das darin besteht, daß die Monomere mit der Lösung eines palladiumhaltigen Katalysators in einem Verdünnungsmittel, in dem die Copolymere nahezu oder vollständig unlöslich sind, kontaktiert werden und das so gebildete Pulver isoliert wird, und
d) eine Schüttdichte von mehr als 0,3 g/ml besitzen.

10. Copolymere nach Anspruch 9, deren Schüttdichte mindestens 0,5 g/ml beträgt.

## Revendications (Revendications pour l'(les) Etat(s) contractant(s) suivant(s): ES)

1. Procédé pour la préparation de copolymères, caractérisé en ce qu'un mélange de monoxyde de carbone avec un ou plusieurs composés oléfiniquement insaturés est copolymérisé en mettant en contact en continu le mélange dans un réacteur unique à l'état stable avec une solution d'une composition catalytique contenant du palladium en présence de diluant liquide dans lequel les copolymères sont presque ou entièrement insolubles, le quotient de la quantité de copolymère formé par heure et la quantité de copolymère dans le réacteur à tout moment étant inférieur à 0,2.

2. Procédé selon la revendication 1, caractérisé en ce que ledit quotient est inférieur à 0,15.

3. Procédé selon la revendication 2, caractérisé en ce que ledit quotient est inférieur à 0,1.

4. Procédé selon l'une ou plusieurs des revendications 1 à 3, caractérisé en ce qu'une composition catalytique est mise en oeuvre sur la base:
a) d'un composé de palladium;
b) d'un anion d'un acide avec un pKa inférieur à 6; et
c) d'un composé ayant la formule générale R₁R₂M₁-R-M₂R₃R₄, dans laquelle M₁ et M₂ sont des éléments identiques ou différents choisis dans le groupe formé par l'arsenic, l'antimoine, le phosphore et l'azote, dans lesquels R₁ à R₄ représentent des hydrocarbures identiques ou différents, éventuellement substitués par des groupes polaires, et dans lesquels R représente un groupe pontant divalent contenant au moins deux atomes de carbone dans le pont.

5. Procédé selon la revendication 4, caractérisé en ce qu'une composition catalytique est mise en oeuvre dans laquelle le composant c) est présent en une quantité comprise entre 0,75 et 1,5 mole par mole de composé de palladium.

6. Procédé selon la revendication 4, caractérisé en ce qu'une composition catalytique est mise en oeuvre dans laquelle au moins un des groupes R₁ à R₄ présents dans le composant c) sont des groupes phényle qui contiennent au moins un substituant polaire, de préférence un groupe orthoalcoxy.

7. Procédé selon la revendication 6, caractérisé en ce qu'une composition catalytique est mise en oeuvre dans laquelle les groupes R₁ à R₄ présents dans le composant c) sont les groupes 2-méthoxyphényle.

8. Procédé selon l'une ou plusieurs des revendications 1 à 7, caractérisé en ce que de l'éthylène ou un mélange d'éthylène avec du propène est mis en oeuvre sous forme de composés oléfiniquement insaturés.

9. Procédé pour la préparation de copolymères de monoxyde de carbone avec un ou plusieurs composés (A) oléfiniquement insaturés consistant à mettre en contact les monomères avec une solution d'un catalyseur contenant du palladium dans un diluant dans lequel les copolymères sont presque ou entièrement insolubles et à isoler la poudre ainsi formée, copolymères qui
a) possèdent une structure linéaire;
b) sont constitués de motifs ayant la formule générale -(CO)-A'- dans laquelle A' représente un motif monomère provenant d'un monomère A que l'on a mis en oeuvre;
c) sont des poudres, et
d) possèdent une densité apparente supérieure à 0,3 g/ml, sauf pour un procédé pour la préparation de copolymères ayant une densité apparente de 0,4 g/ml ou moins.

10. Procédé selon la revendication 9, dans lequel les polymères sont préparés en ayant une densité apparente supérieure à 0,5 g/ml.

## Revendications (Revendications pour l'(les) Etat(s) contractant(s) suivant(s): GR, LU)

1. Procédé pour la préparation de copolymères, caractérisé en ce qu'un mélange de monoxyde de carbone avec un ou plusieurs composés oléfiniquement insaturés est copolymérisé en mettant en contact en continu le mélange dans un réacteur unique à l'état stable avec une solution d'une composition catalytique contenant du palladium en présence de diluant liquide dans lequel les copolymères sont presque ou entièrement insolubles, le quotient de la quantité de copolymère formé par heure et la quantité de copolymère dans le réacteur à tout moment étant inférieur à 0,2.

2. Procédé selon la revendication 1, caractérisé en ce que ledit quotient est inférieur à 0,15.

3. Procédé selon la revendication 2, caractérisé en ce que ledit quotient est inférieur à 0,1.

4. Procédé selon l'une ou plusieurs des revendications 1 à 3, caractérisé en ce qu'une composition catalytique est mise en oeuvre sur la base:
a) d'un composé de palladium;
b) d'un anion d'un acide avec un pKa inférieur à 6; et
c) d'un composé ayant la formule générale R₁R₂M₁-R-M₂R₃R₄, dans laquelle M₁ et M₂ sont des éléments identiques ou différents choisis dans le groupe formé par l'arsenic, l'antimoine, le phosphore et l'azote, dans lesquels R₁ à R₄ représentent des hydrocarbures identiques ou différents, éventuellement substitués par des groupes polaires, et dans lesquels R représente un groupe pontant divalent contenant au moins deux atomes de carbone dans le pont.

5. Procédé selon la revendication 4, caractérisé en ce qu'une composition catalytique est mise en oeuvre dans laquelle le composant c) est présent en une quantité comprise entre 0,75 et 1,5 mole par mole de composé de palladium.

6. Procédé selon la revendication 4, caractérisé en ce qu'une composition catalytique est mise en oeuvre dans laquelle au moins un des groupes R₁ à R₄ présents dans le composant c) sont des groupes phényle qui contiennent au moins un substituant polaire, de préférence un groupe ortho-alcoxy.

7. Procédé selon la revendication 6, caractérisé en ce qu'une composition catalytique est mise en oeuvre dans laquelle les groupes R₁ à R₄ présents dans le composant c) sont les groupes 2-méthoxyphényle.

8. Procédé selon l'une ou plusieurs des revendications 1 à 7, caractérisé en ce que de l'éthylène ou un mélange d'éthylène avec du propène est mis en oeuvre sous forme de composés oléfiniquement insaturés.

9. Copolymères de monoxyde de carbone avec un ou plusieurs composés (A) oléfiniquement insaturés, caractérisé en ce que:
a) ils possèdent une structure linéaire;
b) ils sont constitués de motifs ayant la formule générale -(CO)-A'- dans laquelle A' représente un motif monomère provenant d'un monomère A que l'on a mis en oeuvre;
c) ils sont des poudres que l'on peut obtenir à partir d'un procédé consistant à mettre en contact les monomères avec une solution d'un catalyseur contenant du palladium dans un diluant dans lequel les copolymères sont presque ou entièrement insolubles et à isoler la poudre ainsi formée, et
d) ils possèdent une densité apparente supérieure à 0,3 g/ml.

10. Copolymères selon la revendication 9, dans lesquels la densité apparente est d'au moins 0,5 g/ml.

## Revendications (Revendications pour l'(les) Etat(s) contractant(s) suivant(s): AT, BE, CH, DE, FR, GB, IT, LI, NL, SE)

1. Procédé pour la préparation de copolymères, caractérisé en ce qu'un mélange de monoxyde de carbone avec un ou plusieurs composés oléfiniquement insaturés est copolymérisé en mettant en contact en continu le mélange dans un réacteur unique à l'état stable avec une solution d'une composition catalytique contenant du palladium en présence de diluant liquide dans lequel les copolymères sont presque ou entièrement insolubles, le quotient de la quantité de copolymère formé par heure et la quantité de copolymère dans le réacteur à tout moment étant inférieur à 0,2.

2. Procédé selon la revendication 1, caractérisé en ce que ledit quotient est inférieur à 0,15.

3. Procédé selon la revendication 2, caractérisé en ce que ledit quotient est inférieur à 0,1.

4. Procédé selon l'une ou plusieurs des revendications 1 à 3, caractérisé en ce qu'une composition catalytique est mise en oeuvre sur la base:
a) d'un composé de palladium;
b) d'un anion d'un acide avec un pKa inférieur à 6; et
c) d'un composé ayant la formule générale R₁R₂M₁-R-M₂R₃R₄, dans laquelle M₁ et M₂ sont des éléments identiques ou différents choisis dans le groupe formé par l'arsenic, l'antimoine, le phosphore et l'azote, dans lesquels R₁ à R₄ représentent des hydrocarbures identiques ou différents, éventuellement substitués par des groupes polaires, et dans lesquels R représente un groupe pontant divalent contenant au moins deux atomes de carbone dans le pont.

5. Procédé selon la revendication 4, caractérisé en ce qu'une composition catalytique est mise en oeuvre dans laquelle le composant c) est présent en une quantité comprise entre 0,75 et 1,5 mole par mole de composé de palladium.

6. Procédé selon la revendication 4, caractérisé en ce qu'une composition catalytique est mise en oeuvre dans laquelle au moins un des groupes R₁ à R₄ présents dans le composant c) sont des groupes phényle qui contiennent au moins un substituant polaire, de préférence un groupe ortho-alcoxy.

7. Procédé selon la revendication 6, caractérisé en ce qu'une composition catalytique est mise en oeuvre dans laquelle les groupes R₁ à R₄ présents dans le composant c) sont les groupes 2-méthoxyphényle.

8. Procédé selon l'une ou plusieurs des revendications 1 à 7, caractérisé en ce que de l'éthylène ou un mélange d'éthylène avec du propène est mis en oeuvre sous forme de composés oléfiniquement insaturés.

9. Copolymères de monoxyde de carbone avec un ou plusieurs composés (A) oléfiniquement insaturés, caractérisé en ce que:
a) ils possèdent une structure linéaire;
b) ils sont constitués de motifs ayant la formule générale -(CO)-A'- dans laquelle A' représente un motif monomère provenant d'un monomère A que l'on a mis en oeuvre;
c) ils sont des poudres que l'on peut obtenir à partir d'un procédé consistant à mettre en contact les monomères avec une solution d'un catalyseur contenant du palladium dans un diluant dans lequel les copolymères sont presque ou entièrement insolubles et à isoler la poudre ainsi formée, et
d) ils possèdent une densité apparente supérieure à 0,3 g/ml,
sauf pour les copolymères ayant une densité apparente de 0,4 g/ml ou moins.

10. Copolymères selon la revendication 9, dans lesquels la densité apparente est supérieure à 0,5 g/ml.
